# EUROPÄISCHE PATENTSCHRIFT

(11) **EP 1 478 571 B1**
(45) Veröffentlichungstag und Bekanntmachung des Hinweises auf die Patenterteilung: **06.07.2005**
(21) Anmeldenummer: 02806881.5
(22) Anmeldetag: 21.11.2002
(51) Int. Cl.: B64D 9/00, B64C 21/00, B65G 13/06, B65G 13/12, B65G 21/06

(54) **EINBAUVORRICHTUNG ZUM AUFNEHMEN EINER ROLLENANTRIEBSEINHEIT**
INSTALLATION DEVICE FOR ACCOMMODATING A ROLLER DRIVE UNIT
DISPOSITIF D'INSTALLATION DESTINE A LOGER UNE UNITE D'ENTRAINEMENT A GALET

(30) Priorität: 26.02.2002 DE 10208003
(43) Veröffentlichungstag der Anmeldung: 24.11.2004
(73) Patentinhaber: Wittenstein AG, 97999 Igersheim (DE)
(72) Erfinder: HOFMANN, Werner, 97980 Bad Mergentheim (DE); SPINNER, Markus, 97999 Igersheim (DE)
(74) Vertreter: Weiss, Peter, Dr.
(86) Internationale Anmeldenummer: PCT/EP2002/013076
(87) Internationale Veröffentlichungsnummer: WO 2003/072433

(56) Entgegenhaltungen:
- EP-A- 1 055 617
- WO-A-00/71443
- DE-A- 4 338 767
- DE-A- 19 724 941

## Beschreibung

Die vorliegende Erfindung betrifft eine Einbauvorrichtung zum Aufnehmen einer Rollenantriebseinheit zum Antreiben und Fördern von Gegenständen, mit einem Rahmenelement, welches zwischen Befestigungselementen einsetzbar ist.

In derartige Einbauvorrichtungen werden herkömmliche Rollenantriebseinheiten zum Antreiben von Gegenständen auf einem Förderband eingesetzt. Eine entsprechende Einbauvorrichtung ist bspw. in der DE 197 24 914 C2 beschrieben. Nachteilig ist daran, dass ein exaktes Einsetzen sehr montageaufwendig ist, ein Austauschen der Rollenantriebseinheit sowie des Einbaurahmens nur mit erheblichem Montageaufwand erfolgen kann.

Zudem ist nachteilig, dass insbesondere bei Fertigungsungenauigkeiten der Befestigungselemente, zwischen welche der Einbaurahmen eingesetzt werden soll, dieser nicht passt und eine Justierung nicht ohne weitere möglich ist.

Die WO00/71433 A1 offenbart eine Befestigungseinrichtung für ein zwischen benachbarten Trägern einsetzbares Bauteil, wobei das Bauteil zwischen zwei Schienenelemente eingesetzt wird. Durch entsprechende Bolzenelemente wird das Bauteil mit dem Schienensystem verbunden.

Die DE 43 38 767 A1 offenbart eine Rollenantriebseinheit zum Antreiben von Gegenständen auf einer Förderbahn. Dabei ist ein Rahmenelement in eine oben liegende verschlussklappe und ein darunter liegendes Rahmenteil unterteilt, wobei diese Verschlussklappe einem Entnehmen der Antriebsrolle samt Schwenkhalterung dient.

Die DE 197 24 941 A1 beschreibt eine Einbauvorrichtung für eine Rollenantriebseinheit zum Antreiben und Fördern von Gegenständen. Dabei wird die Rollenantriebseinheit, insbesondere dessen Gehäuse mit einem Bodenteil des Schienensystems fest verbunden.

Die EP. 1 055 617 A1 offenbart reine Gleitrollen, die zwischen zwei Schienen über einen starren Hilfsrahmen einsetzbar sind.

Der vorliegenden Erfindung liegt daher die Aufgabe zugrunde, eine Einbauvorrichtung der eingangs genannten Art zu schaffen, welche die genannten Nachteile beseitigt, und mit welcher auf sehr kostengünstige effektive Weise ein schnelles und genaues Einsetzen der Einbaueinrichtung in Befestigungselemente ermöglicht wird, wobei auch ein Austauschen bspw. zur Überholung oder einer defekten Rollenantriebseinrichtung mit Einbaurahmen sehr schnell und kostengünstig erfolgen soll.

Zur Lösung dieser Aufgabe führt, dass das Rahmenelement zum Einsetzen zwischen Befestigungselemente in seiner Breite veränderbar ist.

Bei der vorliegenden Erfindung ist von grundlegender, wesentlicher Bedeutung, dass eine Breite einer Einbauvorrichtung veränderbar ist. Dabei sind mehrere Möglichkeiten zum Verändern der Breite des Einbaurahmens denkbar. Eine bevorzugte Ausführungsform gewährleistet, dass insbesondere Quertraversen klappbar ausgebildet sind, so dass in aufgeklapptem bzw. abgewinkeltem Zustand einzelner Quertraversen, eine Breite der Einbauvorrichtung reduziert ist. Entsprechend kann dann im zusammen- oder eingeklapptem Zustand der Einbaurahmen zwischen vorzugsweise gegenüberliegende Befestigungselemente, insbesondere Schienenelemente oder auch Roller-Tracks genannt, eingeführt werden. Durch Aufklappen der entsprechenden Quertraversen lassen sich die seitlichen Zapfenelemente der Längstraversen in entsprechende Ausnehmungen der Befestigungselemente einführen, um den Einbaurahmen festzulegen. Damit ein Lösen von alleine nicht möglich ist, können entsprechende Verriegelungen bzw. Zentrierungen die einzelnen Teile der klappbaren Quertraversen fest miteinander verbinden, so dass insgesamt der Einbaurahmen zwischen den Befestigungselementen bzw. Roller-Tracks fixiert eingesetzt ist. Durch entsprechendes Lösen der Verriegelung lässt sich der Rahmen durch Einklappen sehr einfach herausnehmen. Die in den Roller-Track eingesetzte Einbauvorrichtung dient zum Aufnehmen einer Rollenantriebseinheit, die in dieser schwenkbar gelagert ist. Durch das Einsetzen der Rollenantriebseinrichtung werden die Quertraversen gegeneinander zusätzlich vor Aufklappen gesichert.

Im Rahmen der vorliegenden Erfindung soll jedoch auch liegen, eine Breite des Einbaurahmens zum Einsetzen und Einführen der Zapfenelemente der Längstraverse in entsprechende Ausnehmungen der Befestigungselemente zu verändern, in dem die Quertraverse, bspw. durch an- oder ineinander verfahrbare Elemente, Schienenelemente od. dgl. ausgebildet sein kann. Auch ist denkbar, dass die Quertraverse aus rohrartigen Elementen, die ineinander linear verfahrbar sind, ausgebildet sein kann, um eine Breite der Einbaurvorrichtung zum Einsetzen zwischen zwei Roller-Tracks zu gewährleisten.

Entsprechende Verriegelungen, Rastmechanismen od. dgl. können ebenfalls vorgesehen sein, um eine gewünschte Breite festzulegen. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer Einbauvorrichtung zum Aufnehmen einer Rollenantriebseinheit;
Figur 2 eine schematisch dargestellte, perspektivische Ansicht der Einbauvorrichtung gemäss Figur 1 in einer anderen Gebrauchslage;
Figur 3 eine schematisch dargestellte Ansicht der Einbauvorrichtung in einer anderen Gebrauchslage;
Figur 4 eine schematisch dargestellte Ansicht der Einbauvorrichtung zum Einsetzen zwischen Befestigungselemente eines Roller-Tracks;
Figur 5 eine schematisch dargestellte, perspektivische Ansicht der in den Rollertrack eingesetzen Einbauvorrichtung zum Aufnehmen der Rollenantriebseinheit;
Figur 6 eine schematisch dargestellte perspektivische Ansicht einer in den Roller-Track eingesetzten Einbauvorrichtung mit eingesetzter Rollenantriebseinheit.

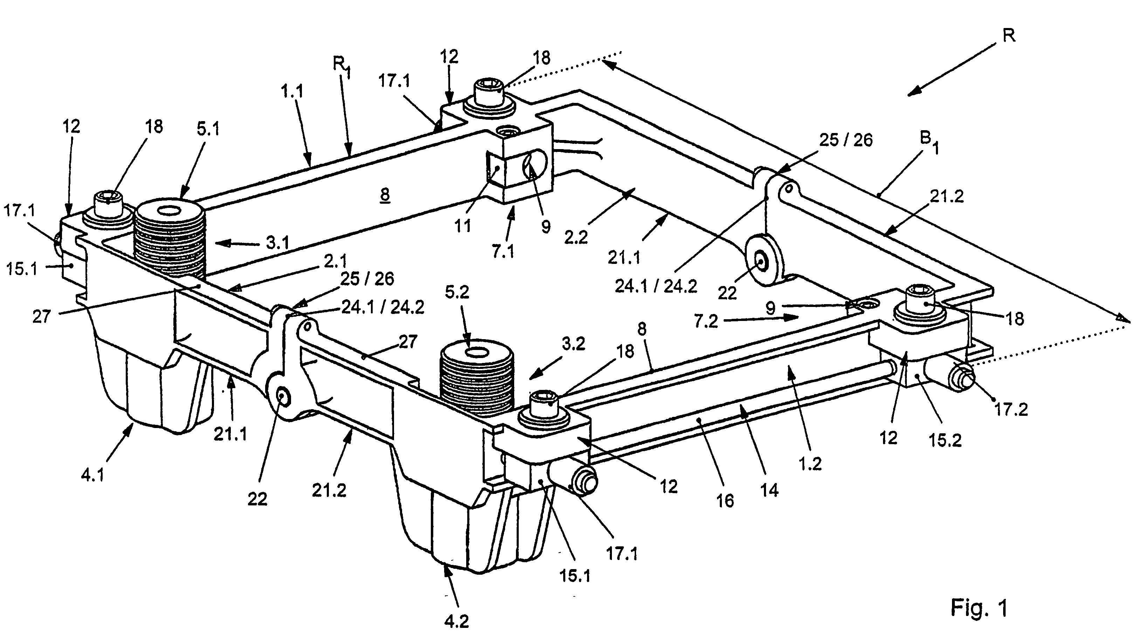

Gemäss Figur 1 weist eine erfindungsgemässe Einbauvorrichtung R ein Rahmenelement R₁ mit zwei in einer Breite B₁ vorzugsweise parallel zueinander beabstandete Längstraversen 1.1, 1.2 auf, an welche jeweils endseitig zum Verbinden der Längstraversen 1.1, 1.2 Quertraversen 2.1, 2.2 anschliessen. Dabei verbinden die Quertraversen 2.1, 2.2 die Längstraversen 1.1, 1.2 zur Einbauvorrichtung R bzw. zum Rahmenelement R₁. Die Längstraversen 1.1, 1.2 und Quertraversen 2.1, 2.2 können aus querschnittlich rechteckartig ausgebildeten Profilen, Gussprofilen, Rohrprofilen od. dgl. hergestellt sein. Hierauf sei die Erfindung nicht beschränkt.

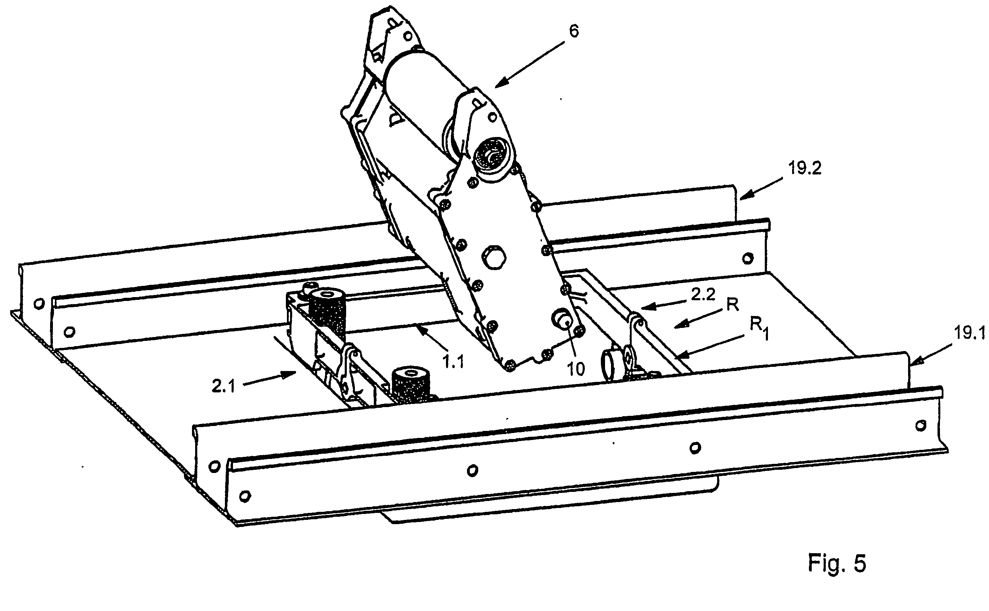

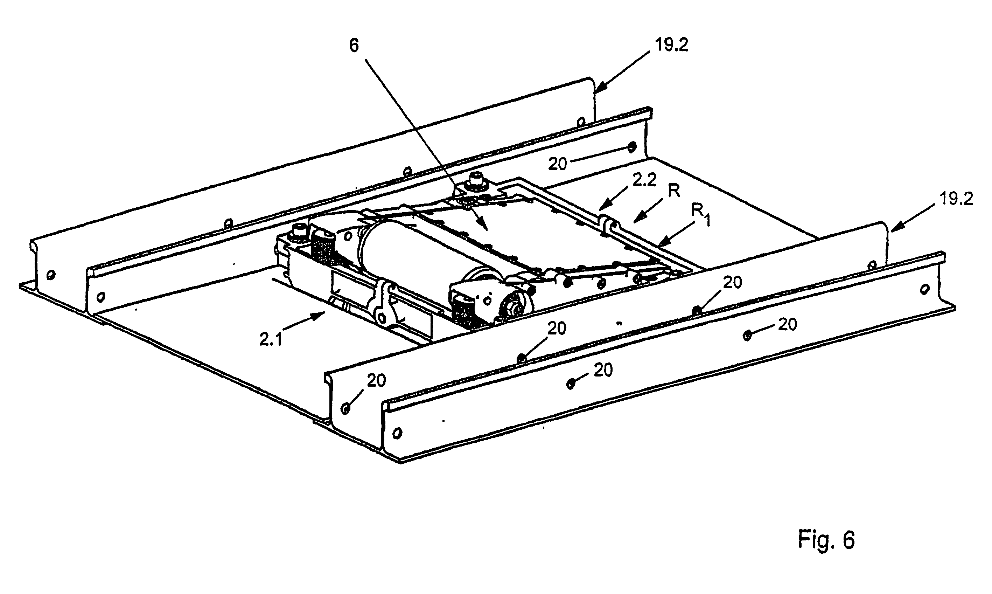

In jeweils gegenüberliegenden Eckbereichen 3.1, 3.2 sind Aufnahmelager 4.1, 4.2 für Aufnahmeelemente 5.1, 5.2 ggf. als Feder-Dämfer-Element ausgebildet, zur Lagerung einer Rollenantriebseinheit 6, wie sie in den Figuren 5 und 6 angedeutet ist, vorgesehen. In gegenüberliegenden Eckbereichen 7.1, 7.2 sind innerhalb der Längstraverse 1.1, 1.2 im Bereich einer Innenwand 8 nach innen verstärkt ausgebildete und hervorstehende Aufnahmetaschen 9 vorgesehen. In die Aufnahmetaschen 9 lässt sich die Rollenantriebseinheit 6, wie es insbesondere in Figur 5 dargestellt ist, mit entsprechenden, seitlichen Haltezapfen 10 in die Aufnahmetaschen 9 einsetzen, und mittels einer Verriegelung 11 darin wiederlösbar festlegen.

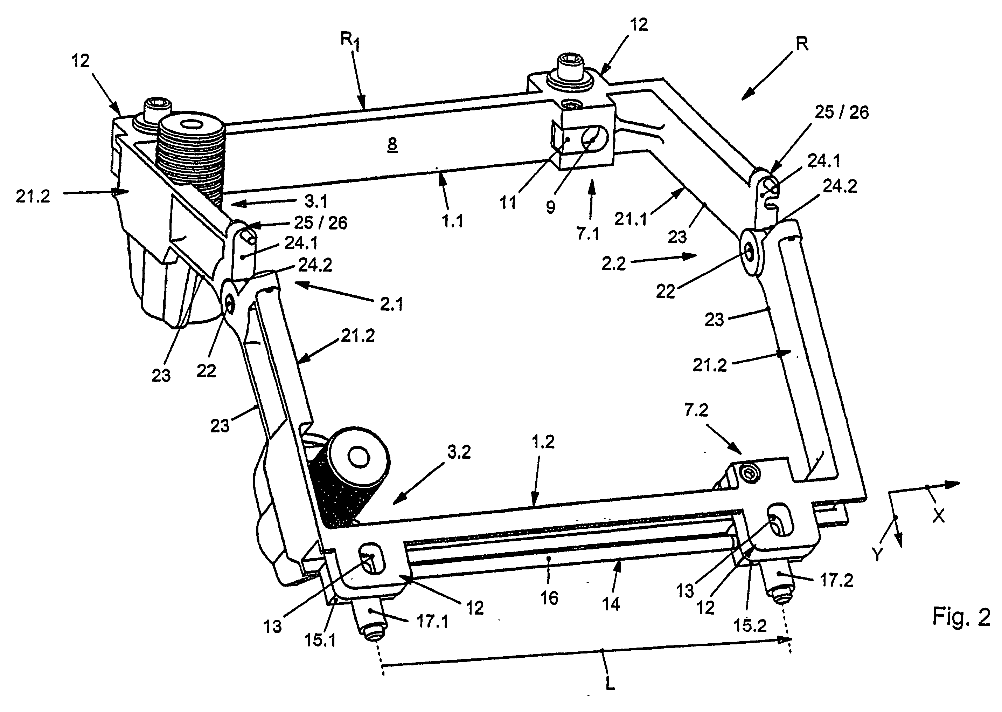

Ferner sind in den Längstraversen 1.1, 1.2, wie es auch insbesondere in Figur 2 hervorgeht, vorzugsweise nahe der Eckbereiche 3.1, 7.1 sowie 3.2 und 7.2 jeweils Aufnahmeflansche 12 vorgesehen, die, wie es insbesondere in Figur 2 angedeutet ist, jeweils mit einer Ausnehmung 13 versehen sind.

An die beiden Aufnahmeflansche 12 lässt sich eine Befestigungseinrichtung 14 wiederlösbar festlegen, wobei die Befestigungseinrichtung 14 aus jeweils zwei Flanschblöcken 15.1, 15.2 mit dazwischenliegender Abstandsstrebe 16 gebildet ist. Die Flanschblöcke 15.1, 15.2 sind mit Zapfenelementen 17.1, 17.2 versehen, die in etwa lotrecht von dem Flanschblock 15.1, 15.2 seitlich und lotrecht zur Längstraverse 1.1, 1.2 abragen.

Wichtig ist, dass die Flanschblöchke 15.1, 15.2 über die Abstandsstrebe 16.1, 16.2 definiert zueinander beabstandet sind, so dass eine definierte Länge L zweier beabstandeter Zapfenelemente 17.1, 17.2 definiert und voreinstellbar ist. Bevorzugt steht die Abstandsstrebe 16 mit über einem hier nur angedeuteten Gewinde mit dem Flanschblock 15.2 in Verbindung, so dass ggf. durch Verdrehen des Flanschblockes 15.1 oder 15.2 gegenüber der Abstandsstrebe 16 eine Feinjustierung der Länge L möglich ist.

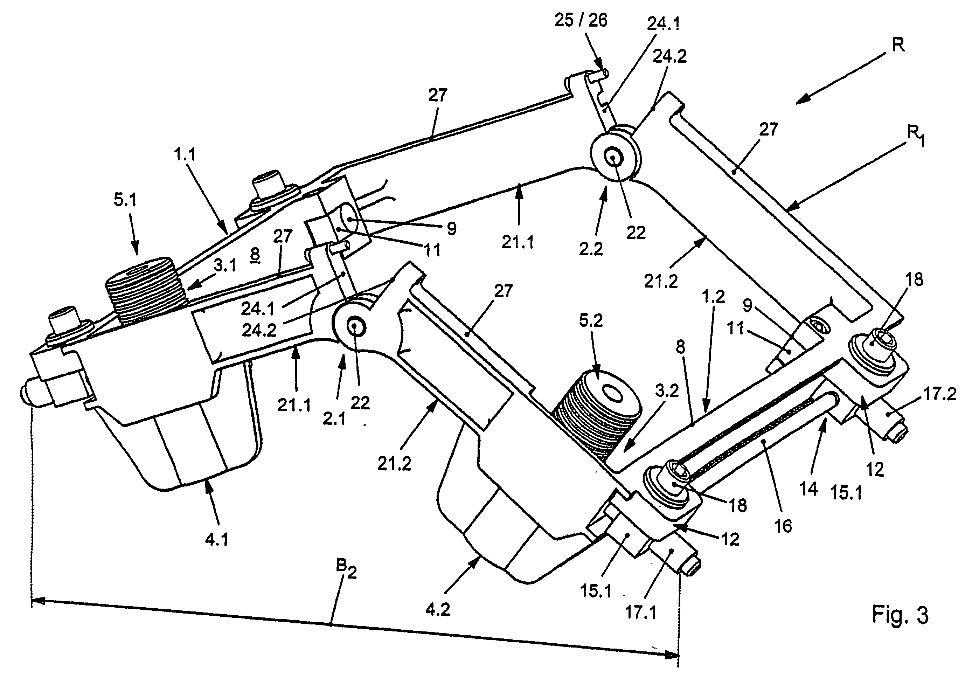

Wichtig ist auch, bei der vorliegenden Erfindung, wie es insbesondere in Figur 2 dargestellt ist, dass die Befestigungseinrichtung 14 über bspw. Befestigungsschrauben 18, die durch die Ausnehmung 13 hindurchgreifen mit jeweils den Flanschblöcken 15.1, 15.2 verbunden werden können. Dabei liegen, wie es insbesondere in den Figuren 1 und 3 aufgezeigt ist, die Flanschblöcke 15.1, 15.2 von unten an dem Aufnahmeelement 12 an, und liegen flächig aneinander.

Die Ausnehmungen 13 sind vorzugsweise rechteckartig oder langlochartig ausgebildet, so dass, wie es insbesondere in Figur 2 angedeutet ist, die Befestigungseinrichtung 14 durch Lösen der Schrauben 18 ein Justierung in einer dargestellten X- und/oder Y-Richtung gegenüber der Einbauvorrichtung R zulässt.

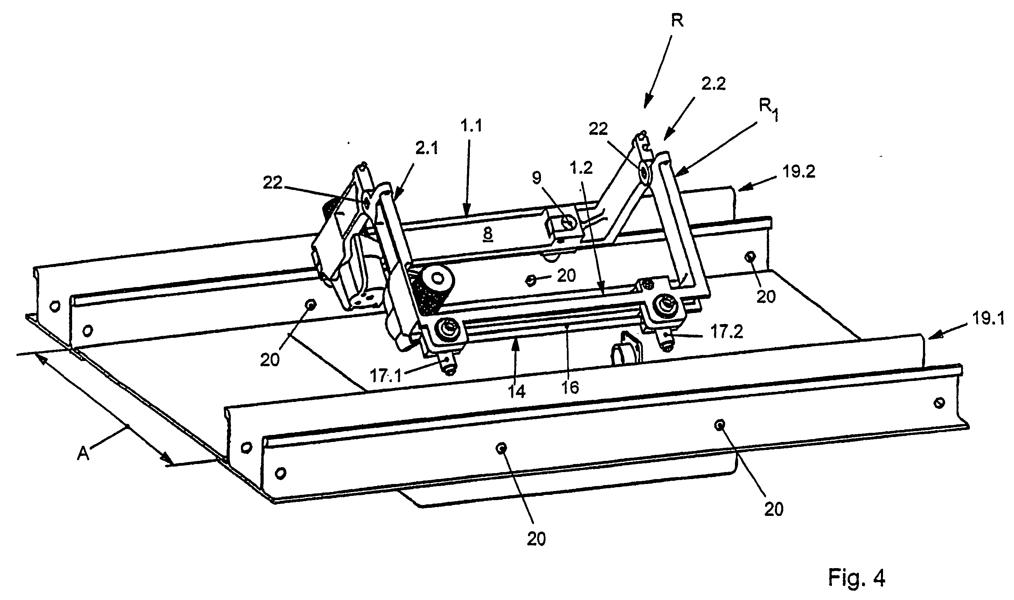

Wie es insbesondere in dem Ausführungsbeispiel der vorliegenden Erfindung gemäss Figur 4 dargestellt ist, lässt sich die Einbauvorrichtung R zwischen die Befestigungselemente 19.1, 19.2 einsetzen, indem die Zapfenelemente 17.1, 17.2 zumindest mit deren hier nicht näher bezeichneten Absatz in entsprechende, passende Ausnehmungen 20 eingreifen.

Da die Befestigungselemente 19.1, 19.2, die vorzugsweise als schienenartig ausgebildete Elemente ausgebildet sind, zueinander nicht immer exakt parallel verlaufen und die gegenüberliegenden Ausnehmungen 20 der jeweiligen Befestigungselemente 19.1, 19.2 nicht exakt fluchten und zueinander lotrecht ausgerichtet sind, hat sich als vorteilhaft erwiesen bei der vorliegenden Erfindung über die Befestigungseinrichtung 14 Ungenauigkeiten der Befestigungselemente 19.1, 19.2 zum Rahmenelement R₁ hin auszugleichen und zu kompensieren. Dabei bleibt gewährleistet bei der Befestigungseinrichtung 14, dass eine Länge L über die Abstandsstreben 16 konstant gehalten wird. Dabei lässt sich die Befestigungseinrichtung 14 entsprechend der Ausnehmung 13 im Aufnahmeflansch 12, wie in Figur 2 dargestellt, in und entgegen dargestellter X-und/oder Y-Richtung justieren, so dass die Zapfenelemente 17.1, 17.2 der Befestigungseinrichtung 14 passgenau in die einzelnen Ausnehmungen eingreifen, und somit spielfrei die Einbauvorrichtung R zwischen die Befestigungselemente 19.1, 19.2, insbesondere zwischen die Roller-Tracks bzw. Schienenelemente eingesetzt bzw. befestigt werden kann. Hierdurch lässt sich Einfluss nehmen auf sich ändernde Fluchten, Ungenauigkeiten, Verzug etc. gegenüberliegender Ausnehmungen 20 der Befestigungselemente 19.1, 19.2.

Ferner hat sich als vorteilhaft bei der vorliegenden Erfindung erwiesen, wie es insbesondere in Figur 2 hervorgeht, dass die Quertraverse 2.1, 2.2 vorzugsweise zweiteilig aus Teilen 21.1, 21.2 ausgebildet ist, wobei die beiden Teile 21.1, 21.2 über ein gemeinsames Gelenk 22 miteinander gelenkig verbunden sind.

Dabei hat sich als vorteilhaft erwiesen im Bereich einer Unterseite 23, insbesondere in den stirnseitigen Bereichen der Teile 21.1, 21.2 das Gelenk 22 anzuordnen, im die beiden Teile 21.1, 21.2 miteinander zu verbinden.

Dabei liegen die jeweiligen Stirnseiten 24.1, 24.2 im geschlossenen Zustand, wie es insbesondere in Figur 1 dargestellt ist, aneinander.

Bei der vorliegenden Erfindung lässt sich durch Lösen einer Verriegelung 25 und/oder Zentrierung 26, wie es in Figur 1 angedeutet ist, die gelenkige Verbindung der Teile 21.1, 21.2 lösen, so dass die Quertraversen 2.1 und 2.2, wie es insbesondere in den Figuren 2, 3 und 4 dargestellt ist, abklappen, um eine Breite B₁ auf eine Breite B₂, siehe, Figur 3, zu reduzieren. Diese Breite B₂ ist geringer als ein Abstand A zweier benachbarter Befestigungselemente 19.1, 19.2, siehe Figur 4, so dass in zusammengeklappter Position, wie es insbesondere in Figur 4 dargestellt ist, die Einbauvorrichtung R zwischen die Befestigungselemente 19.1, 19.2 bspw. von oben eingeführt und durch Zusammenklappen der einzelnen Teile 21.1, 21.2 der jeweiligen Quertraversen 2.1, 2.2 die Einbauvorrichtung R mit ihren Zapfenelementen 17.1, 17.2 zwischen die Befestigungselementen 19.1, 19.2 in deren Ausnehmungen 20 eingeführt werden kann.

Nach dem Einführen und Auseinanderklappen zwischen den Befestigungselementen 19.1, 19.2 lässt sich ein Entnehmen der Einbauvorrichtung R in umgekehrter Weise realisieren.

Die Verriegelung 25 bzw. Zentrierung 26 dient der Sicherung der eingesetzen Einbauvorrichtung R zwischen die Befestigungselemente 19.1, 19.2.

Als Verriegelung 25 kann bspw. eine Schraubenverbindung die beiden Teile 21.1, 21.2 im Bereich einer Oberseite 27 als Sicherung und/oder Zentrierung miteinander wiederlösbar verbinden, so dass die Einbauvorrichtung R fest zwischen den Befestigungselementen 19.1, 19.2 eingesetzt ist. Nach dem Einsetzen der Einbauvorrichtung R zwischen die Befestigungselemente 19.1, 19.2, insbesondere Roller-Tracks, lässt sich, wie es insbesondere in den Figuren 5 und 6 dargestellt ist, die Rollenantriebseinheit 6 in die Einbauvorrichtung R, insbesondere in die Aufnahmetaschen 9 der jeweiligen Längstraversen 1.1, 1.2 einsetzen.

Ebenso soll im Rahmen der vorliegenden Erfindung liegen, dass die jeweiligen Quertraversen 2.1, 2.2 bspw. als ineinander oder gegeneinander bewegbaren Schienen- und/oder Rohrelemente ausgebildet sein können, um eine Breite B₁ auf eine Breite B₂ zu verringern, so dass die Einbauvorrichtung R zwischen die Befestigungselemente 19.1, 29.1 eingesetzt werden kann und anschliessend zum Einführen und Festlegen der Zapfenelemente 17.1, 17.2 in die jeweiligen Ausnehmungen 20 der Befestigungselement 19.1, 19.2 auseinander bewegt werden. Entsprechende Verriegelungsvorrichtungen können ebenfalls hier vorgesehen sein, die ggf. rastbar sind, um die Breite B₁, B₂ der Quertraversen 2.1, 2.2 zu verändern.

Die vorliegende Erfindung sei auf aufklappbare Ausbildung der Quertraversen 2.1, 2.2 nicht beschränkt.

| **Positionszahlenliste** | | | | | |
|---|---|---|---|---|---|
| 1 | Längstraverse | 34 | | 67 | |
| 2 | Quertraverse | 35 | | 68 | |
| 3 | Eckbereich | 36 | | 69 | |
| 4 | Aufnahmelager | 37 | | 70 | |
| 5 | Aufnahmeelement | 38 | | 71 | |
| 6 | Rollenantriebseinheit | 39 | | 72 | |
| 7 | Eckbereich | 40 | | 73 | |
| 8 | Innenwand | 41 | | 74 | |
| 9 | Aufnahmetasche | 42 | | 75 | |
| 10 | Haltezapfen | 43 | | 76 | |
| 11 | Versiegelung | 44 | | 77 | |
| 12 | Aufnahmeflansch | 45 | | 78 | |
| 13 | Ausnehmung | 46 | | 79 | |
| 14 | Befestigungseinrichtung | 47 | | | |
| 15 | Flanschblock | 48 | | R₁ | Rahmenelement |
| 16 | Abstandsstrebe | 49 | | | |
| 17 | Zapfenelement | 50 | | R | Einbauvorrichtung |
| 18 | Befestigungsschraube | 51 | | | |
| 19 | Befestigungselement | 52 | | A | Abstand |
| 20 | Ausnehmung | 53 | | | |
| 21 | Teil | 54 | | B₁ | Breite |
| 22 | Gelenk | 55 | | B₂ | Breite |
| 23 | Unterseite | 56 | | | |
| 24 | Stirnseite | 57 | | L | Länge |
| 25 | Verriegelung | 58 | | | |
| 26 | Zentrierung | 59 | | X | Richtung |
| 27 | Oberseite | 60 | | | |
| 28 | | 61 | | Y | Richtung |
| 29 | | 62 | | | |
| 30 | | 63 | | | |
| 31 | | 64 | | | |
| 32 | | 65 | | | |
| 33 | | 66 | | | |

## Patentansprüche

1. Einbauvorrichtung zum Aufnehmen einer Rollenantriebseinheit (6) zum Antreiben und Fördern von Gegenständen, mit einem Rahmenelement (R₁), welches zwischen Befestigungselementen (19.1, 19.2) einsetzbar ist,
**dadurch gekennzeichnet,**
**dass** das Rahmenelement (R₁) zum Einsetzen zwischen Befestigungselemente (19.1 19.2) in seiner Breite (B₁, B₂) veränderbar ist.

2. Einbauvorrichtung nach Anspruch 1, **dadurch gekennzeichnet, dass** das Rahmenelement (R₁) zum Einsetzen zwischen die Befestigungselemente (19.1, 19.2) klappbar ausgebildet ist.

3. Einbauvorrichtung nach Anspruch 1 oder 2, **dadurch gekennzeichnet, dass** zumindest eine Quertraverse (2.1, 2.2) des Rahmenelementes (R₁) längenveränderbar ist.

4. Einbauvorrichtung nach Anspruch 3, **dadurch gekennzeichnet, dass** die zumindest eine Quertraverse (2.1, 2.2) um ein Gelenk (22) klappbar oder schwenkbar ausgebildet ist.

5. Einbauvorrichtung nach Anspruch 3 oder 4, **dadurch gekennzeichnet, dass** die zumindest eine Quertraverse (2.1, 2.2) zweiteilig ausgebildet ist, und einzelnen Teile (21.1, 21.2) der Quertraverse (2.1, 2.2) zum Verändern einer Breite (B₁, B₂) gegeneinander oder ineinander verschiebbar und in einer wählbaren Position festlegbar sind.

6. Einbauvorrichtung nach wenigstens einem der Ansprüche 3 bis 5, **dadurch gekennzeichnet, dass** jeweils endseits der Quertraversen (2.1, 2.2) Längstraversen (1.1, 1.2) anschliessen, wobei von den Längstraversen (1.1, 1.2) zueinander beabstandete Zapfenelemente (17.1, 17.2) direkt oder indirekt abragen, welche in entsprechende Ausnehmungen (20) der Befestigungselemente (19.1, 19.2) zum Einsetzen des Rahmenelementes (R₁) eingreifen.

7. Einbauvorrichtung nach Anspruch 6, **dadurch gekennzeichnet, dass** innerhalb der Längstraverse (1.1, 1.2) jeweils beidseits gegenüberliegende Aufnahmetaschen (9.1, 9.2) zum wiederlosbaren Einsetzen der Rollenantriebseinheit (6) vorgesehen sind.

8. Einbauvorrichtung nach wenigstens einem der Ansprüche 4 bis 7, **dadurch gekennzeichnet, dass** im stirnseitigen Bereich des Gelenkes (22) die Quertraverse (2) mit einer Zentrierung (26) und/oder Verriegelung (25) versehen ist, welche die jeweiligen Teile (21.1, 21.2) der Quertraverse (2.1, 2.2) miteinander wiederlösbar verbindet.

9. Einbauvorrichtung nach Anspruch 8, **dadurch gekennzeichnet, dass** in einer zusammengeklappten Einbaulage jeweils Stirnseiten (24) der einzelnen Teile (21.1, 21.2) der Quertraverse (2.1, 2.2) aneinander anschlagen und die jeweiligen über das Gelenk (22) verbundenen Teile (21.1, 21.2) in einer gemeinsamen Ebene liegen.

10. Einbauvorrichtung nach wenigstens einem der Ansprüche 8 oder 9 **dadurch gekennzeichnet, dass** an einer Unterseite (23) der Quertraverse (2.1, 2.2) über das Gelenk (22) die beiden Teile (21.1, 21.2) gelenkartig miteinander verbunden sind und an einer Oberseite (27) die Zentrierung (26) und/oder Verriegelung (25) vorgesehen ist.

11. Einbauvorrichtung nach wenigstens einem der Ansprüche 1 bis 10, **dadurch gekennzeichnet, dass** die Quertraversen (2.1, 2.2) aus jeweils zwei Teilen (21.1, 21.2) gebildet sind, welche schienenartig ineinandergrefen und längenveränderbar und gegeneinander passend festlegbar sind.

12. Einbauvorrichtung nach wenigstens einem der Ansprüche 8 bis 11, **dadurch gekennzeichnet, dass** die beiden Teile (21.1, 21.2) einer jeweiligen Quertraverse (2.1, 2.2) gegeneinander und/oder ineinander verschiebbar sind, um eine Breite (B₁, B₂) zu verändern.

## Claims

1. Installation apparatus for accommodating a roller drive unit (6) for driving and conveying articles, said apparatus having a frame element (R₁), which is insertable between fastening elements (19.1. 19.2), **characterised in that** the frame element (R₁) is variable in respect of its width (B₁, B₂) for inserting between fastening elements (19.1, 19.2).

2. Installation apparatus according to claim 1, **characterised in that** the frame element (R₁) is adapted to be foldable for inserting between the fastening elements (19.1, 19.2).

3. Installation apparatus according to claim 1 or 2, **characterised in that** at least one transverse bar (2.1, 2.2) of the frame element (R₁) is longitudinally variable.

4. Installation apparatus according to claim 3, **characterised in that** the at least one transverse bar (2.1, 2.2) is adapted to be foldable or pivotable about a pivot joint (22).

5. Installation apparatus according to claim 3 or 4, **characterised in that** the at least one transverse bar (2.1, 2.2) has a two-part configuration, and individual parts (21.1, 21.2) of the transverse bar (2.1, 2.2) are displaceable towards each other or in each other for varying a width (B₁, B₂), and are securable in a selectable position.

6. Installation apparatus according to at least one of claims 3 to 5, **characterised in that** longitudinal bars (1.1, 1.2) communicate with the respective ends of the transverse bars (2.1, 2.2), spaced-apart pin elements (17.1, 17.2) protruding directly or indirectly from the longitudinal bars (1.1, 1.2) and engaging in corresponding recesses (20) in the fastening elements (19.1, 19.2) for inserting the frame element (R₁).

7. Installation apparatus according to claim 6, **characterised in that** oppositely situated receiver compartments (9.1, 9.2) are provided within the longitudinal bars (1.1, 1.2) on each side for the re-releasable insertion of the roller drive unit (6).

8. Installation apparatus according to at least one of claims 4 to 7, **characterised in that**, in the end-face region of the pivot joint (22), the transverse bar (2) is provided with a centring means (26) and/or a locking means (25), which re-releasably connect or connects the respective parts (21.1, 21.2) of the transverse bar (2.1, 2.2) to one another.

9. Installation apparatus according to claim 8, **characterised in that**, in a folded-up installation position, respective end faces (24) of the individual parts (21.1, 21.2) of the transverse bar (2.1, 2.2) abut against each other, and the respective parts (21.1, 21.2), which are connected via the pivot joint (22), lie in a common plane.

10. Installation apparatus according to at least one of claims 8 or 9, **characterised in that**, on an underside (23) of the transverse bar (2.1, 2.2), the two parts (21.1, 21.2) are pivotally interconnected via the pivot joint (22), and the centring means (26) and/or the locking means (25) are or is provided on an upper side (27).

11. Installation apparatus according to at least one of claims 1 to 10, **characterised in that** the transverse bars (2.1, 2.2) are formed from two parts (21.1, 21.2) respectively, which engage in each other in a rail-like manner and are securable in a longitudinally variable manner so as to fit against each other.

12. Installation apparatus according to at least one of claims 8 to 11, **characterised in that** the two parts (21.1, 21.2) of each transverse bar (2.1, 2.2) are displaceable towards each other and/or in each other, in order to vary a width (B₁, B₂).

## Revendications

1. Dispositif d'installation destiné à loger une unité d'entraînement à galet (6) destinée à entraîner et transporter des objets, avec un élément de cadre (R₁) qui peut être placé entre des éléments de fixation (19.1, 19.2), **caractérisé par le fait**
**que** l'élément de cadre (R₁) est variable quant à sa largeur (B₁, B₂) pour le placement entre des éléments de fixation (19.1, 19.2).

2. Dispositif d'installation selon la revendication 1, **caractérisé par le fait que** l'élément de cadre (R₁) est réalisé rabattable en vue du placement entre les éléments de fixation (19.1, 19.2).

3. Dispositif d'installation selon la revendication 1 ou 2, **caractérisé par le fait qu'**au moins une traverse (2.1, 2.2) de l'élément de cadre (R₁) est variable en longueur.

4. Dispositif d'installation selon la revendication 3, **caractérisé par le fait que** l'au moins une traverse (2.1, 2.2) est réalisée rabattable ou pivotable autour d'une articulation (22).

5. Dispositif d'installation selon la revendication 3 ou 4, **caractérisé par le fait que** l'au moins une traverse (2.1, 2.2) est réalisée en deux pièces et que les différentes pièces (21.1, 21.2) de la traverse (2.1, 2.2) peuvent se déplacer l'une par rapport à l'autre ou l'une dans l'autre, en vue de modifier une largeur (B₁, B₂), et peuvent être fixées en une position sélectionnable.

6. Dispositif d'installation selon au moins l'une des revendications 3 à 5, **caractérisé par le fait que** du côté de chacune des extrémités des traverses (2.1, 2.2) aboutent des longerons (1.1, 1.2), des longerons (1.1, 1.2) s'élevant, directement ou indirectement, des éléments de tourillon (17.1, 17.2) distants entre eux qui s'engagent dans des évidements (20) correspondants des éléments de fixation (19.1, 19.2), en vue du placement de l'élément de cadre (R₁).

7. Dispositif d'installation selon la revendication 6, **caractérisé par le fait que** dans le longeron (1.1, 1.2) sont prévues des poches de réception (9.1, 9.2) opposées des deux côtés, en vue du placement amovible de l'unité d'entraînement à galet (6).

8. Dispositif d'installation selon au moins l'une des revendications 4 à 7, **caractérisé par le fait que**, dans la zone frontale de l'articulation (22), la traverse (2) est pourvue d'un centrage (26) et/ou d'un verrouillage (25) qui relie les pièces respectives (21.1, 21.2) de la traverse (2.1, 2.2) l'une à l'autre.

9. Dispositif d'installation selon la revendication 8, **caractérisé par le fait que**, dans une position d'installation rabattue, les faces frontales (24) des différentes pièces (21.1, 21.2) de la traverse ( 2.1, 2.2) viennent en butée l'une contre l'autre et que les pièces respectives (21.1, 21.2) reliées par l'intermédiaire de l'articulation (22) se situent dans un plan commun.

10. Dispositif d'installation selon au moins l'une des revendications 8 ou 9, **caractérisé par le fait que**, à une face inférieure (23) de la traverse (2.1, 2.2), les deux pièces (21.1, 21 2) sont reliées l'une à l'autre de manière articulée par l'intermédiaire de l'articulation (22) et qu'à la face supérieure (27) est prévu le centrage (26) et/ou le verrouillage (25).

11. Dispositif d'installation selon au moins l'une des revendications 1 à 10, **caractérisé par le fait que** les traverses (2.1, 2.2) sont réalisées, chacune, en deux pièces (21.1, 21.2) qui s'engagent l'une dans l'autre à la manière d'un rail et qui sont variables en longueur et peuvent être fixées de manière adaptée l'une contre l'autre.

12. Dispositif d'installation selon au moins l'une des revendications 8 à 11, **caractérisé par le fait que** les deux pièces (21.1, 21.2) d'une traverse (2.1, 2.2) respective peuvent se déplacer l'une contre l'autre et/ou l'une dans l'autre, pour modifier une largeur (B₁, B₂).
